# EUROPEAN PATENT APPLICATION

(11) **EP 2 581 755 A1**
(43) Date of publication of application: **17.04.2013**
(21) Application number: 12188098.3
(22) Date of filing: 11.10.2012
(51) Int. Cl.: G01R 31/40

(54) **Method and device for testing a solar panel**

(30) Priority: 11.10.2011 NL 1039098
(71) Applicant: Kema Nederland B.V., 6800 ET Arnhem (NL)
(72) Inventor: Vet, Bas, 6800 ET Arnhem (NL); Jansen, Markus Johan, 1755 ZG Petten (NL); Timpert, Laurens Jurgen, 6800 ET Arnhem (NL)
(74) Representative: Mink-Lindenburg, Charlotte Hildegard

(57) **Abstract**

The invention relates to a method for testing a solar panel (13), wherein the solar panel is irradiated using a light source (19) with known parameters, and wherein parameters of the solar panel are measured (20). According to the invention different parts of the solar panel are successively irradiated, wherein the parameters of the solar panel are measured in each case. The measured parameters are then combined on the basis of an equivalent-circuit diagram of the solar panel in order to obtain an estimate of the parameters which would have been measured in the case of a full irradiation of the solar panel. The different parts are preferably selected so as to be at least substantially wholly disjunct.

## Description

The invention relates to a method for testing a solar panel, wherein parameters of the solar panel are measured in a non-irradiated state and in a state wherein the solar panel is irradiated using a light source with known parameters. A solar panel is understood here to mean any device which has the purpose of converting sunlight to electrical energy on the basis of the photoelectric effect.

According to the prior art a solar panel to be tested is irradiated homogeneously over the whole surface using a light source with which the radiation of the sun is simulated. The parameters used are usually 1000 Watt/m² and a so-called AM 1.5 spectrum, while the temperature of the solar panel is kept at 298K. Said parameters are laid down in the IEC 60904 standard.

A significant drawback of the known method is that, especially for very large solar panels, a light source for fully irradiating the solar panels is extremely expensive. The method according to the invention obviates this drawback and has the feature that different parts of the solar panel are successively irradiated and that the parameters of the solar panel are measured here in each case, after which the measured parameters are combined in a predetermined manner in order to obtain an estimate of the parameters which would have been measured in the case of a full irradiation of the solar panel. The measured parameters are generally the generated voltage, the generated current and a voltage-current curve with which the maximum generated power can be determined.

A favourable realization of the inventive method has the feature that the different parts are at least substantially wholly disjunct so that the generated voltage, the total generated current and the total generated power can be calculated using a relatively simple equivalent-circuit diagram. It has been found experimentally that the thus determined parameters of a solar panel correspond precisely to the parameters as measured in the case of a full irradiation of the solar panel.

A favourable realization, wherein the equivalent-circuit diagram can be significantly simplified, has the feature that different parts comprise identical numbers of solar cells connected in series and connected in parallel. The solar panel is thus divided here into disjunct, identical parts.

A further favourable realization has the feature that the different parts at least substantially wholly cover the solar panel so that the parameters of the solar panel are in effect measured for the whole surface.

A further very favourable realization has the feature that for each solar panel the parameters measured for the different parts are also compared to each other, wherein the relative distribution can be determined for the generated voltage, the generated current and the maximum generated power. This can provide important indications in respect of the quality of the production process of the solar panel. An increasing distribution of one of the parameters can more particularly be a reason for timely modification of the production process, whereby rejection can be prevented.

The invention also relates to a device for testing a solar panel, comprising a calibrated light source for irradiating the solar panel and a measuring member for measuring parameters of the solar panel. The device is more specifically intended for the purpose of testing a very large solar panel for which a testing device and/or a calibrated light source which can fully irradiate the solar panel is not available and/or is much too expensive. The inventive device has for this purpose the feature that it also comprises a mask placed in a situation of use between the light source and the solar panel, and a drive connected to the mask and/or the solar panel and adapted to successively irradiate different parts of the solar panel, in addition to a computer connected to the measuring member and programmed to combine the measured parameters such that an estimate is obtained of the parameters of the solar panel in the case of full irradiation.

A favourable embodiment of the device has the feature that the drive is adapted such that the successively irradiated parts are at least substantially wholly disjunct, whereby the generated voltage, the total generated current and the total generated power for the solar panel can be calculated by the computer using a relatively simple equivalent-circuit diagram. It has been found experimentally that the thus calculated parameters of a solar panel correspond precisely with the parameters as measured in a full irradiation of the solar panel.

A further favourable embodiment wherein the calculation can be significantly simplified has the feature that the successively irradiated parts comprise identical numbers of solar cells connected in series and connected in parallel.

A further favourable embodiment has the feature that the drive is adapted such that the successively irradiated parts at least substantially wholly cover the solar panel so that, for the purpose of determining the parameters of the solar panel, the parameters measured for the whole surface are included in the calculation.

A further favourable embodiment has the feature that the mask has a length of at least twice a length of the solar panel and/or has a width of twice a width of the solar panel, thereby preventing in simple manner that unintentionally irradiated parts of the solar panel absorb scattered light.

A further highly favourable embodiment has the feature that the computer is also programmed to mutually compare the parameters measured for the successively irradiated parts of a solar panel. The maximum generated power can for instance thus be determined for the successively irradiated parts. If this is smaller for one of the successively irradiated parts, this may indicate that the light-sensitive layer is too thin at that location, which may be a reason for timely modification of the production process. If the whole surface is measured in one operation as according to the prior art, a small variation is not then discerned, whereby the production process cannot be adjusted in good time.

The invention will now be further elucidated with reference to the following figures, wherein:
- Fig. 1: shows schematically a possible embodiment of a solar cell;
- Fig. 1B: shows a simplified equivalent-circuit diagram for a solar cell on the basis of crystalline silicon;
- Fig. 1C: shows a simplified equivalent-circuit diagram for a solar cell on the basis of amorphous silicon;
- Fig. 2: shows schematically a possible embodiment of a solar panel with 624 solar cells;
- Fig. 3A: shows a schematic top view of this solar panel with a mask in a first position;
- Fig. 3B: shows a schematic top view of this solar panel with the mask in a second position;
- Fig. 4A: shows a schematic side view of a measurement setup with the mask and a light source in the first position;
- Fig. 4B: shows a schematic side view of an alternative embodiment of a measurement setup.

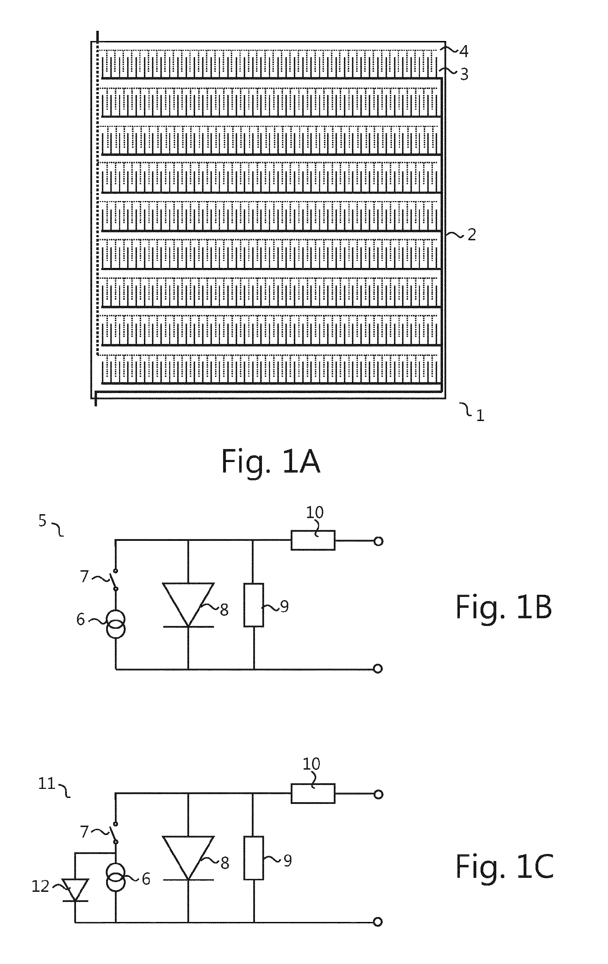

Fig. 1A shows schematically a possible embodiment of a per se known solar cell 1, consisting of a substrate 2 of semiconductor material such as for instance silicon, provided on an upper side with a transparent layer (not visible in the figure) and a first electrode structure 3 via which a generated current can be discharged with low loss, provided on an underside with a reflective layer (not visible in the figure) and a second electrode structure 4 via which the generated current can be discharged with low loss. A solar panel is usually constructed from a large number of solar cells 1 which are connected in series and in parallel such that in a situation of use a predetermined voltage and current are generated.

Fig. 1B shows a possible equivalent-circuit diagram 5 for a solar cell 1 on the basis of crystalline silicon, with which the properties of a solar panel consisting of a number of solar cells connected in series and in parallel can be determined in simple manner. The equivalent-circuit diagram comprises a current source 6 which represents the current generated by the photoelectric effect, a switch 7 which indicates whether or not solar cell 1 is being irradiated, a diode 8 which represents the dark current occurring when solar cell 1 is not being irradiated, a shunt resistor 9 which is caused by imperfections resulting during the production process and a series resistor 10 which represents the resistance of the semiconductor material, the electrode structure and the wiring of solar cell 1. The values of the above stated components can be determined for any type of solar cell in a manner known in the field. The properties of the solar panel can then be calculated, wherein the resistance of the wiring mutually connecting the solar cells also has to be taken into account.

Fig. 1C shows a possible equivalent-circuit diagram 11 for a solar cell 1 on the basis of amorphous silicon, with which the properties of a solar panel consisting of a number of solar cells connected in series and in parallel can be determined in simple manner. The equivalent-circuit diagram once again comprises a current source 6 which represents the current generated by the photoelectric effect, a switch 7 which indicates whether or not solar cell 1 is being irradiated, a diode 8 which represents the dark current occurring when solar cell 1 is not being irradiated, a shunt resistor 9 which is caused by imperfections resulting during the production process, and a series resistor 10 which represents the resistance of the semiconductor material, the electrode structure and the wiring of solar cell 1. The equivalent-circuit diagram 11 moreover comprises an additional diode 12, which represents a correcting current corresponding to the extra recombination in the amorphous silicon. It is also the case here that the values of the above stated components can be determined for any type of solar cell in a manner known in the field. The properties of the solar panel can then be calculated, wherein the resistance of the wiring mutually connecting the solar cells once again has to be taken into account.

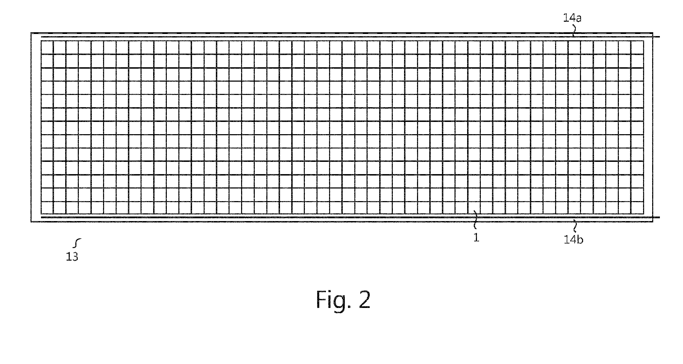

Fig. 2 shows schematically a possible embodiment of a solar panel 13 with 624 solar cells, wherein columns of 13 solar cells at a time are connected in series and wherein the 48 columns are connected in parallel via wiring 14a,14b. In order to test solar panel 13 use is made according to the prior art of a commercially available, calibrated light source which generates for instance 1000 Watt/m² with a so-called AM 1.5 spectrum, while the temperature of the solar panel is kept at 298K. For the purpose of large-scale generation of solar energy it is advantageous to make the solar panels very large. An important step here is the development of solar panels on the basis of amorphous silicon, vapour-deposited on a plastic membrane. Mounted on for instance a bitumen layer, such solar panels can be used as roof covering. Solar panels of this type can have a length of for instance 10 metres. The problem is that for very large solar panels a light source suitable for testing thereof is not available, while development of such a light source is very costly. According to the invention a solar panel can be tested by successively irradiating different parts of the solar panel and, using the voltage, current and the maximum generated power measured here, calculating the voltage, the current and the maximum generated power of the whole solar panel on the basis of a model available for one solar cell and on the basis of the resistance of the wiring of the solar panel. For the purpose of irradiating a part of the solar cell use is preferably made of a mask with an opening leaving this part clear, while adjacent solar cells remain non-irradiated. An available, commercially obtainable light source can be placed here above the opening.

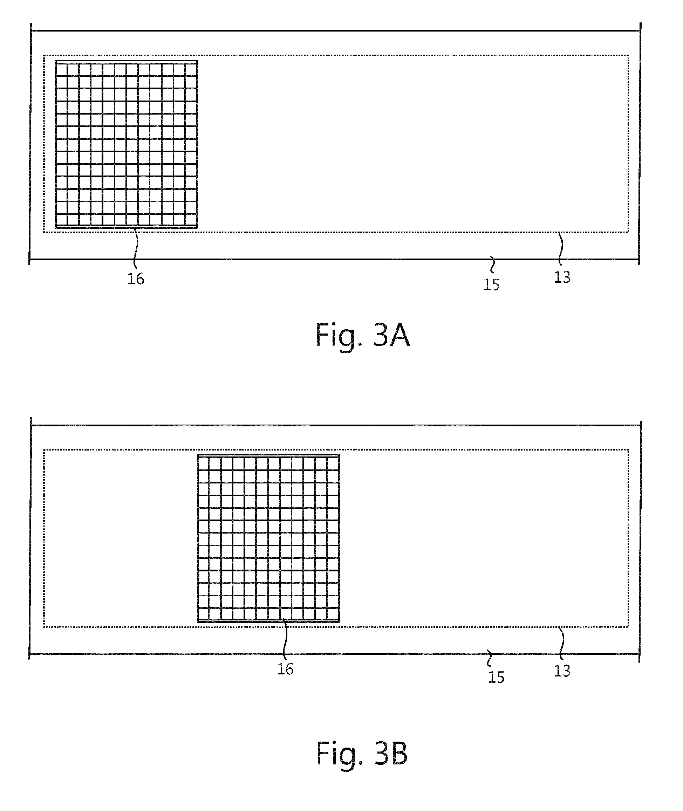

Fig. 3A shows a schematic top view of a solar panel 13 covered by a mask 15 with an opening 16 which leaves clear a first group of 12 columns of solar panel 13 so that the solar cells of these columns can be irradiated.

Fig. 3B shows a schematic top view of this solar panel with mask 15 in a second position, wherein opening 16 leaves clear a second group of 12 columns. A third and a fourth group of columns can also be measured in wholly corresponding manner. The dark current of the solar panel is subsequently measured, wherein mask 15 covers the solar panel completely. The parameters of the solar panel can then be determined on the basis of the model of the solar cell used and the resistance of the wiring of the solar panel. For very large solar panels it is possible, if desired, to measure a relatively small number of groups of columns and to determine the distribution of the parameters measured herein. With a small distribution the parameters for the whole solar panel can be precisely estimated on the basis of the measured parameters.

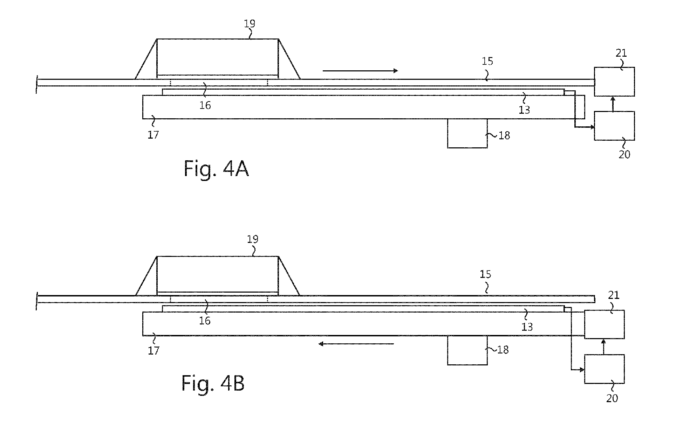

Fig. 4A shows a schematic side view of a possible embodiment of a measurement setup, consisting of a fixedly disposed table 17 on which solar panel 13 is fixed. Table 17 is provided with a temperature control 18 which holds the temperature at 298K. Mounted slidably above table 17 is a mask 15 provided with an opening 16 and positioned above the first group of 16 columns of solar cells as according to Fig. 3A. A light source 19 is fixedly mounted on mask 15 such that opening 16 is uniformly irradiated. Parameters of solar panel 13 are measured with a per se known measurement setup 20 provided with a computer which stores the parameters and subsequently controls a drive 21, with which mask 15 is displaced so that the whole solar panel 13 is successively measured and the computer can calculate the parameters of solar panel 13. The computer can also calculate the distribution values of the measured parameters and generate a warning if these distribution values exceed predetermined values.

Fig. 4B shows a schematic side view of an alternative measurement setup which is wholly similar to the measurement setup shown in Fig. 4A but wherein table 17 is arranged slidably and drive 21 is mounted on table 17, whereby mask 15 and light source 19 can be fixedly mounted.

## Claims

1. Method for testing a solar panel, wherein parameters of the solar panel are measured in a non-irradiated state and in a state wherein the solar panel is irradiated using a light source with known parameters, **characterized in that** different parts of the solar panel are successively irradiated and that the parameters of the solar panel are measured here in each case, after which the measured parameters are combined in a predetermined manner in order to obtain an estimate of the parameters which would have been measured in the case of a full irradiation of the solar panel.

2. Method as claimed in claim 1, **characterized in that** the different parts are at least substantially wholly disjunct.

3. Method as claimed in claim 2, **characterized in that** different parts comprise identical numbers of solar cells connected in series and connected in parallel.

4. Method as claimed in claim 3, **characterized in that** the different parts at least substantially wholly cover the solar panel.

5. Method as claimed in claim 2, 3 or 4, **characterized in that** for each solar panel the parameters measured for the different parts are also compared to each other.

6. Device for testing a solar panel, comprising a calibrated light source for irradiating the solar panel and a measuring member for measuring parameters of the solar panel, **characterized in that** the device also comprises a mask placed in a situation of use between the light source and the solar panel, and a drive connected to the mask and/or the solar panel and adapted to successively irradiate different parts of the solar panel, in addition to a computer connected to the measuring member and programmed to combine the measured parameters such that an estimate is obtained of the parameters of the solar panel in the case of full irradiation.

7. Device as claimed in claim 6, **characterized in that** the drive is adapted such that the successively irradiated parts are at least substantially wholly disjunct.

8. Device as claimed in claim 7, **characterized in that** the successively irradiated parts comprise identical numbers of solar cells connected in series and connected in parallel.

9. Device as claimed in claim 8, **characterized in that** the drive is adapted such that the successively irradiated parts at least substantially wholly cover the solar panel.

10. Device as claimed in any of the claims 6 to 9, **characterized in that** the mask has a length of at least twice a length of the solar panel and/or has a width of twice a width of the solar panel.

11. Device as claimed in any of the claims 6 to 10, **characterized in that** the computer is also programmed to mutually compare the parameters measured for the successively irradiated parts of a solar panel.
